# EUROPEAN PATENT SPECIFICATION

(11) **EP 4 438 345 B1**
(45) Date of publication and mention of the grant of the patent: **25.02.2026**
(21) Application number: 24157262.7
(22) Date of filing: 13.02.2024
(51) Int. Cl.: B60C 13/00

(54) **PNEUMATIC TIRE**
LUFTREIFEN
PNEUMATIQUE

(30) Priority: 28.03.2023 JP 2023050939
(43) Date of publication of application: 02.10.2024
(73) Proprietor: Toyo Tire Corporation, Itami-shi, Hyogo 664-0847 (JP)
(72) Inventor: SAKURA, Masaaki, Hyogo, 664-0847 (JP)
(74) Representative: Meissner Bolte Partnerschaft mbB

(56) References cited:
- EP-B1- 1 109 681
- JP-A- 2010 274 740
- US-A- 5 263 525
- US-A1- 2016 185 163
- US-A1- 2021 039 448
- US-B2- 11 407 258

## Description

### BACKGROUND OF THE INVENTION

### Field of the Invention

The present invention relates to a pneumatic tire.

### Description of the Related Art

Some pneumatic tires have a serration pattern in which a large number of ridges are arranged provided on an outer surface of a sidewall. A shadow caused by the serration pattern produces a decorative effect such as making local irregularities caused by a joint portion of a carcass less visible or improving the appearance of the sidewall. The more the shadow caused by the serration pattern is emphasized (the darker the shadow), the higher the decorative effect.

Patent Document 1 discloses a pneumatic tire having a serration pattern provided on an outer surface of a sidewall. It seems, however, difficult for such a tire to emphasize a shadow caused by the serration pattern because the deepest portion of the serration pattern is located at the same position as a tire virtual outer surface or located outside in a tire axial direction relative to the tire virtual outer surface, and the shallowest portion of the serration pattern is located inside in the tire axial direction relative to a top portion of a vent line, which tends to make ridges small in height.

Patent Document 2 discloses a pneumatic tire having a serration pattern provided on an outer surface of a sidewall. It seems, however, difficult for such a tire to emphasize a shadow caused by the serration pattern because the serration pattern is disposed in a depression that is lower than an outer surface of a sidewall, and a height of ridges is less than a depth of the depression. In addition, such a serration pattern cannot be expected to have a protector effect, which causes a concern about lower resistance of the sidewall to external damage.
Patent Document 3 discloses a side wall of a tire having a graphic element, being filled with a texture comprising a plurality of stands or lamellae.
Patent Document 4 discloses a tire provided with a background ridge pattern region, a first bank-like ridge region, a second band-like ridge region and a marking display region provided on the surface of a side wall portion of the tire.
Patent Document 5 relates to a tire having an embossed mark on the surface of the tire's sidewall.
Patent Document 6 describes a pneumatic tire including a sidewall portion provided with a side pattern.

### Prior Art Document

### Patent Document

Patent Document 1: JP 2010-274 740 A
Patent Document 2: JP 2021-59 255 A
Patent Document 3: US 2016/185163 A1
Patent Document 4: US 2021/039448 A1
Patent Document 5 : US 5 263 525 A
Patent Document 6 : US 11 407 258 B2

### SUMMARY OF THE INVENTION

The present invention has been made in view of the above-described circumstances, and it is therefore an object of the present invention to provide a pneumatic tire capable of increasing a decorative effect of a serration pattern while making resistance of a sidewall to external damage high enough.

A pneumatic tire according to the present invention includes the features set forth in claim 1.

### BRIEF DESCRIPTION OF THE DRAWINGS

FIG. 1 is a cross-sectional view schematically illustrating an example of a pneumatic tire according to the present embodiment;
FIG. 2 is an enlarged view of a main part of FIG. 1;
FIG. 3 is a diagram illustrating a part of an outer surface of a sidewall as viewed from the outside in a tire axial direction;
FIG. 4 is a partially enlarged view of FIG. 3;
FIG. 5 is a cross-sectional view taken along line A-A of FIG. 4;
FIG. 6 is a cross-sectional view taken along line B-B of FIG. 4;
FIG. 7 is a cross-sectional view taken along line C-C of FIG. 4;
FIG. 8 is a diagram illustrating a part of the outer surface of the sidewall as viewed from the outside in the tire axial direction;
FIG. 9 is a partially enlarged view of FIG. 8;
FIG. 10 is a cross-sectional view taken along line D-D of FIG. 9; and
FIG. 11 is a cross-sectional view taken along line E-E of FIG. 9.

### DETAILED DESCRIPTION OF THE PREFERRED EMBODIMENTS

An embodiment of a pneumatic tire according to the present invention will be described with reference to the drawings.

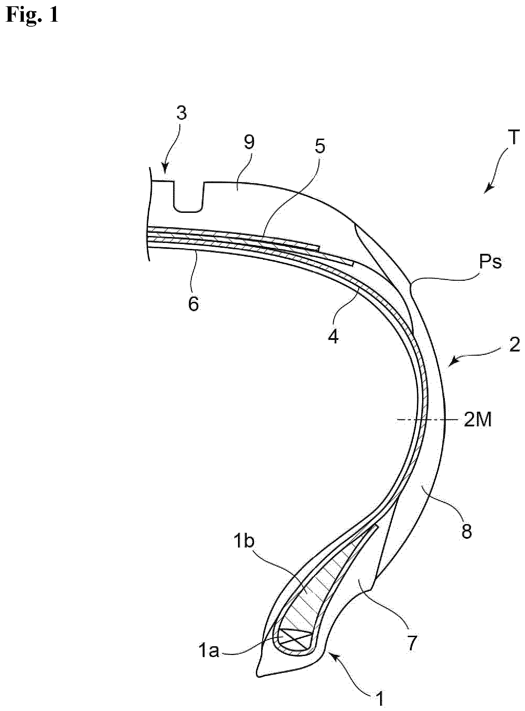

FIG. 1 is a cross-sectional view schematically illustrating a pneumatic tire T of the present embodiment. The tire T is an automobile tire including a pair of beads 1, sidewalls 2 each extending outward in a tire radial direction from a corresponding one of the beads 1, and a tread 3 contiguous to an outer end of each of the sidewalls 2 in a tire radial direction.

A bead core 1a having an annular shape is embedded in each bead 1. The bead core 1a includes a bundle member such as steel wires covered with rubber. A bead filler 1b is disposed adjacent to an outer side of the bead core 1a in the tire radial direction. The bead filler 1b includes rubber having a triangular cross section extending outward in the tire radial direction from the bead core 1a.

Here, the tire radial direction is a direction along a diameter of the tire T and corresponds to a vertical direction in FIG. 1. In FIG. 1, an upper side is an outer side in the tire radial direction, and a lower side is an inner side in the tire radial direction. A tire axial direction is a direction parallel to a rotation axis of the tire T and corresponds to a horizontal direction in FIG. 1. An inner side in the tire axial direction is a side adjacent to a tire equator line and corresponds to a left side of FIG. 1.

An outer side in the tire axial direction is a side remote from the tire equator line and corresponds to a right side of FIG. 1. The tire equator line is a virtual line located at a center of the tire T in the tire axial direction and orthogonal to the tire rotation axis as the tread is viewed from above. A tire circumferential direction is a direction around the rotation axis of the tire T.

The tire T includes a carcass 4 extending in a toroidal shape across the pair of beads 1. The carcass 4 is wound up from the inner side to the outer side in the tire axial direction so as to surround the bead cores 1a and the bead fillers 1b. The carcass 4 includes a carcass ply formed of carcass cords coated with rubber. The carcass cords are paralleled in a direction intersecting the tire circumferential direction (for example, in a direction at an angle of 75° to 90° with respect to the tire circumferential direction). It is preferable that, as a material of the carcass cords, metal such as steel or organic fibers such as polyester fibers, rayon fibers, nylon fibers, or aramid fibers be used.

The tire T includes a belt 5 placed on an outer side of the carcass 4 in the tire radial direction. The belt 5 is formed of a plurality of (two in the present embodiment) belt plies laminated on top of each other. Each of the belt plies is formed of belt cords coated with rubber. The belt cords are paralleled in a direction intersecting the tire circumferential direction (for example, in a direction at an angle of 20° to 30° with respect to the tire circumferential direction). It is preferable that, as a material of the belt cords, metal cords such as steel cords be used. The plurality of belt plies are laminated such that their respective belt cords extend in different directions to intersect each other.

Although not employed in this example, a structure where a belt reinforcing member is placed on an outer side of the belt 5 in the tire radial direction may be employed. The belt reinforcing member includes a belt reinforcing ply formed of belt reinforcing cords coated with rubber. The belt reinforcing cords are aligned approximately parallel to the tire circumferential direction. The belt reinforcing ply is formed, for example, of one or a plurality of rubber-coated belt reinforcing cords spirally wound along the tire circumferential direction. It is preferable that, as a material of the belt reinforcing cords, the organic fibers described above be used. The belt 5 may be entirely covered with the belt reinforcing member, or alternatively, may be partially (for example, only both ends) covered with the belt reinforcing member.

An inner liner rubber 6 formed of highly impermeable rubber such as butyl rubber is provided on an inner surface of the tire T. A rim strip rubber 7 forming an outer surface of each bead 1 is provided on an outer side of a corresponding bead core 1a and an outer side of a corresponding bead filler 1b in the tire axial direction. A sidewall rubber 8 forming an outer surface of each sidewall 2 is provided on the outer side of the carcass 4 in the tire axial direction. A tread rubber 9 forming an outer surface of the tread 3 is provided on the outer side of the belt 5 in the tire radial direction. A tread pattern satisfying required tire performance and use conditions is provided on the tread rubber 9.

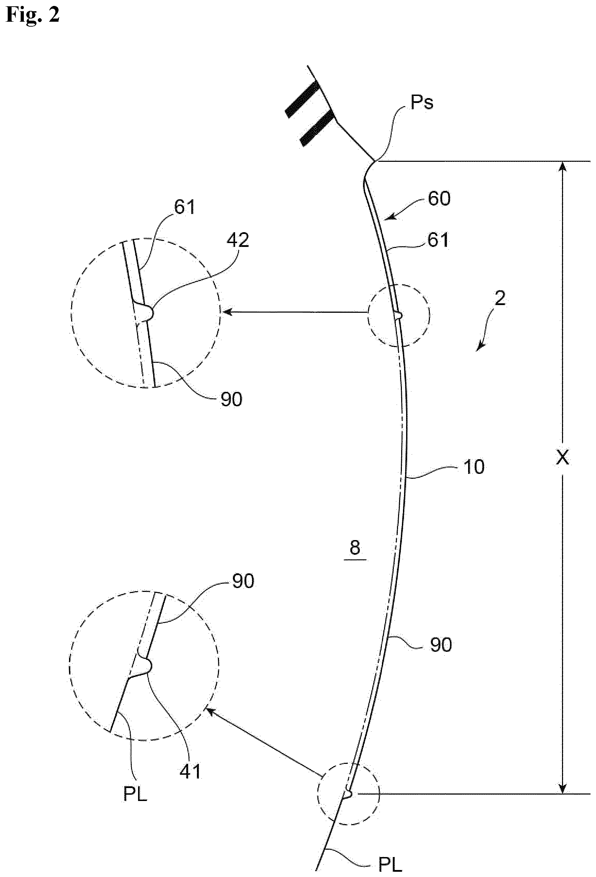

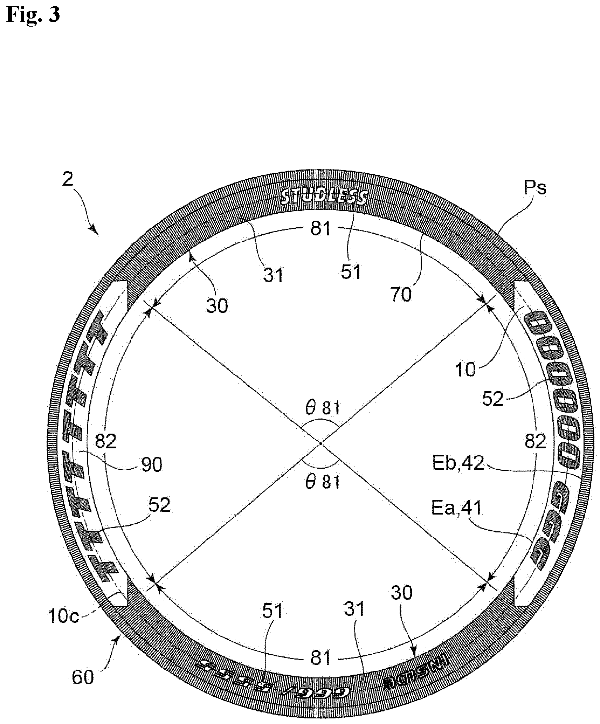

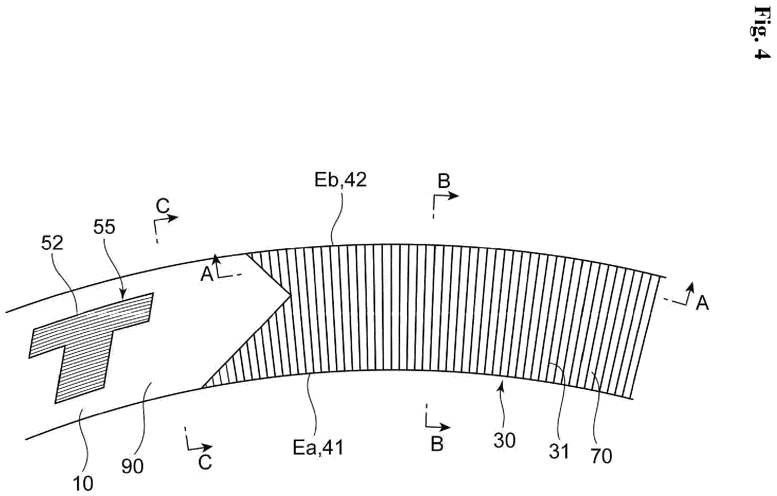

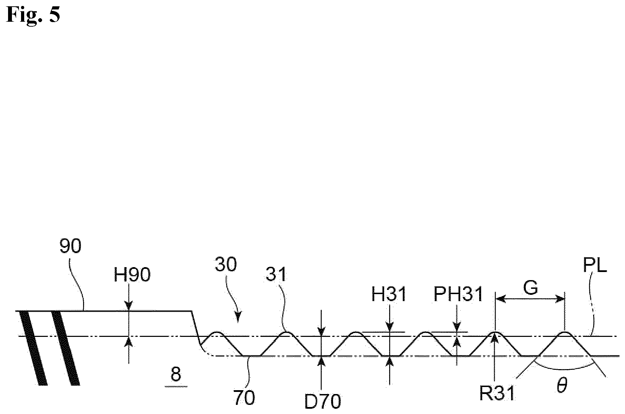

FIG. 2 is an enlarged view of a main part of FIG. 1. FIG. 2 illustrates a cross section taken along line C-C of FIG. 4, but does not illustrate an internal structure of the tire T. FIG. 3 illustrates a part of the outer surface of one of the sidewalls 2, and corresponds to a diagram illustrating a range X in FIG. 2 as viewed from the outside in the tire axial direction. FIG. 4 is a partially enlarged view of FIG. 3. FIGS. 5 to 7 are cross-sectional views taken along lines A-A, B-B, and C-C of FIG. 4, respectively. As illustrated in FIGS. 2 to 7, the tire T includes the pair of sidewalls 2, and, on the outer surface of at least one of the pair of sidewalls 2, a serration pattern 30 in which ridges 31 are arranged is provided.

In this example, the serration pattern 30 is provided in at least a part of a band-shaped region 10 extending in the tire circumferential direction on the outer surface of the sidewall 2. The band-shaped region 10 is provided as an annular region extending over the entire circumference in the tire circumferential direction with a constant width. The band-shaped region 10 is provided on the inner side in the tire radial direction relative to a mold split position Ps. An outer peripheral edge Eb of the band-shaped region 10 is separated inward in the tire radial direction from the mold split position Ps. The mold split position Ps is a boundary (split position) between a tread mold for molding the tread 3 and a side mold for molding the sidewall 2. The mold split position Ps may be identified from a parting line generated on the outer surface of the sidewall 2.

The band-shaped region 10 is provided in a fixed region in the tire radial direction including a tire maximum width position 2M. An inner peripheral edge Ea of the band-shaped region 10 is located on the inner side in the tire radial direction relative to the tire maximum width position 2M, and the outer peripheral edge Eb is located on the outer side in the tire radial direction relative to the tire maximum width position 2M.

The present invention, however, is not limited to such a configuration, and for example, the inner peripheral edge Ea may be located at the tire maximum width position 2M or located on the outer side in the tire radial direction relative to the tire maximum width position 2M. The tire maximum width position 2M is a position where a profile line PL of the sidewall 2 along a tire meridian cross section (a cross section along a plane including a rotation axis of the tire T) is farthest from the tire equator line in the tire axial direction. The profile line PL is a basic outline of the sidewall 2 excluding projections such as a rim protector.

In the present embodiment, the ridges 31 extending in a direction intersecting the tire circumferential direction are arranged in the tire circumferential direction. The ridges 31 thus arranged allow the color (black) of the sidewall rubber 8 to be easily shaded and thus allow an increase in the decorative effect of the serration pattern 30. An angle of an extending direction of each ridge 31 relative to the tire radial direction is set in a range of, for example, 0° to 60°, and is 0° in the example illustrated in FIG. 4. From the viewpoint of reinforcing the sidewall 2 with the ridges 31 connecting and supporting a pair of circumferential projections 41 and 42 to be described later, the angle is preferably in a range of 0° to 45°, and more preferably in a range of 0° to 30°.

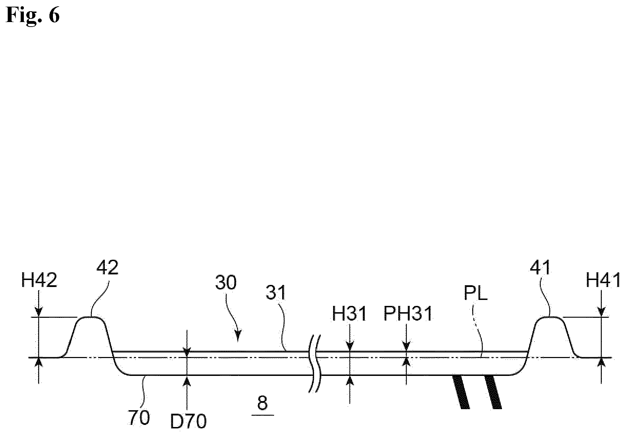

As illustrated in FIGS. 5 and 6, the serration pattern 30 is disposed in a depression 70 that is lower than the profile line PL of the sidewall 2 in the tire axial direction. The depression 70 has a depth D70 relative to the profile line PL. The ridges 31 project outward in the tire axial direction from a bottom surface of the depression 70.

The ridges 31 have a height H31 from bottom to top, the bottom being connected to the bottom surface of the depression 70. The height H31 of the ridges 31 is greater than the depth D70 of the depression 70 (that is, H31 > D70). The ridges 31, therefore, project outward in the tire axial direction relative to the profile line PL. A projection height PH31 of the ridges 31 is obtained relative to the profile line PL.

The serration pattern 30 including the ridges 31 projecting relative to the profile line PL produces a protector effect of protecting the outer surface of the sidewall 2 from a curbstone, a step, or the like, thereby making the resistance of the sidewall 2 to external damage high enough. Since the serration pattern 30 is disposed in the depression 70 that is lower than the profile line PL, the height of the ridges 31 can be easily secured as compared with a case where the serration pattern 30 is not disposed in the depression 70, which is advantageous in increasing the decorative effect by emphasizing the shadow caused by the serration pattern 30.

It is therefore possible to increase the decorative effect of the serration pattern 30 while making the resistance of the sidewall 2 to external damage high enough.

From the viewpoint of making the ridges 31 high in rigidity and increasing the resistance to external damage, it is preferable that the ridges 31 as viewed along the extending direction have a shape that gradually increases in width toward the inner side in the tire axial direction. In particular, when the ridges 31 each have a triangular shape, the shadow is easily emphasized as compared with a trapezoidal shape with a flat top, and the decorative effect can be satisfactorily increased. The triangular shape also includes a triangular shape having a rounded apex (see FIG. 5), and the apex has a radius of curvature R31 less than or equal to 0.3 mm, for example. An opening angle θ is, for example, 90° ± 45°. From the viewpoint of making the number of ridges 31 large enough to increase the resistance to external damage, it is preferable that a gap G between the ridges 31 satisfy a relation of 2 ≤ G/H31 ≤ 6.

From the viewpoint of making the height H31 of the ridges 31 large enough, the depth D70 of the depression 70 is preferably greater than or equal to 0.1 mm, and more preferably greater than or equal to 0.2 mm. From the viewpoint of making the protector effect of the serration pattern 30 high enough, the projection height PH31 of the ridges 31 is preferably greater than or equal to 0.2 mm, and more preferably greater than or equal to 0.3 mm.

From the viewpoint of making the number of ridges 31 large enough to make the resistance to external damage satisfactorily high while avoiding the height H31 of the ridges 31 from becoming excessively large, it is preferable that the projection height PH31 of the ridges 31 be less than the depth D70 of the depression 70 (that is, PH31 < D70).

The band-shaped region 10 is provided between the pair of circumferential projections 41 and 42 projecting outward in the tire axial direction and extending in the tire circumferential direction. The circumferential projections 41, 42 have heights H41 and H42 from bottom to top, respectively, the bottom being connected to the profile line PL. The circumferential projections 41 and 42 extend annularly over the entire circumference in the tire circumferential direction. In this example, the circumferential projection 41 is located at the inner peripheral edge Ea, and the circumferential projection 42 is located at the outer peripheral edge Eb. The serration pattern 30 is in contact with at least one of the pair of circumferential projections 41 and 42, thereby increasing a protective effect against contact with a curbstone or the like in the tire radial direction. In this example, the ridges 31 extending to connect the pair of circumferential projections 41 and 42 are included.

In the present embodiment, the projection height PH31 of the ridges 31 is less than the heights H41 and H42 of the circumferential projections 41 and 42 (that is, PH31 < H41 and H42). Such a configuration allows the serration pattern 30 to be sharply outlined along a boundary with the circumferential projections 41 and 42, which is advantageous in increasing the decorative effect of the serration pattern 30. On the other hand, when the projection height PH31 is greater than or equal to the heights H41 and H42, the serrate surface shape generated by the plurality of ridges 31 becomes clearly visible, and the outline of the serration pattern 30 tends to become blurred accordingly. In this example, the heights H41 and H42 are greater than the depth D70 of the depression 70 and greater than the height H31 of the ridges 31.

As illustrated in FIG. 3, the band-shaped region 10 includes a first portion 81 in which the serration pattern 30 is provided and a second portion 82 in which the serration pattern 30 is not provided. The first portion 81 and the second portion 82 are alternately provided along the tire circumferential direction. An angle θ81 formed by the first portion 81 based on a center position 10c of the band-shaped region 10 is preferably greater than or equal to 30°, more preferably greater than or equal to 45°, and still more preferably greater than or equal to 60°. The center position 10c is a position that is a center between the inner peripheral edge Ea and the outer peripheral edge Eb (that is, a center between the pair of circumferential projections 41 and 42).

The first portion 81 is mainly occupied by the serration pattern 30. A mark 51 is formed, on a part of the first portion 81, by a raised portion projecting outward in the tire axial direction from the bottom surface of the depression 70. The mark 51 includes characters (including numbers), symbols, figures, or the like, and may include various display information such as a tire size, a manufacturer name, and a product type. The same applies to a mark 52 to be described later. In the present embodiment, a height of the raised portion forming the mark 51 are set greater than or equal to the height H31 of the ridges 31, but the present invention is not limited to such a configuration.

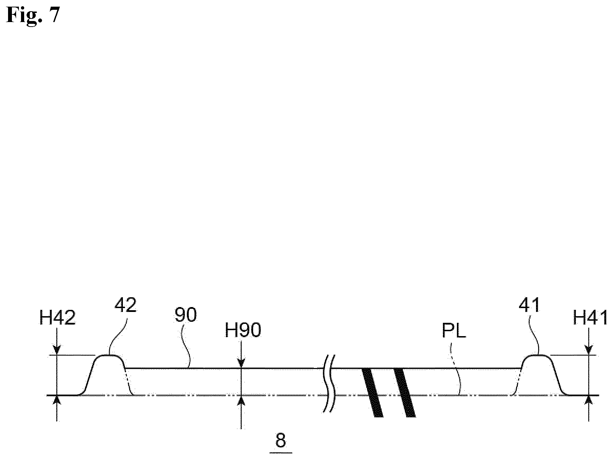

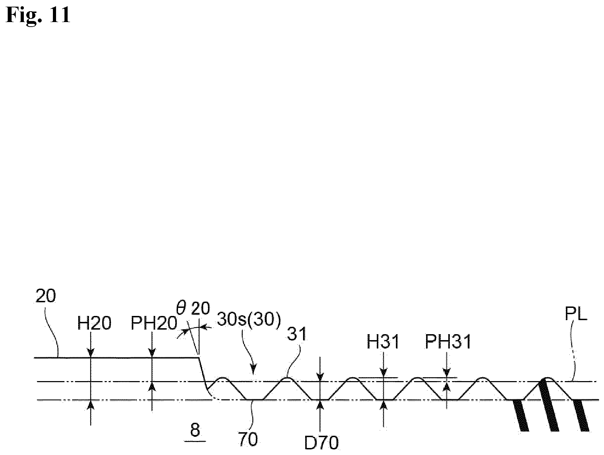

A raised portion 90 projecting outward in the tire axial direction and having a top surface approximately parallel to the profile line PL is provided in the second portion 82. The raised portion 90 has a height H90 from bottom to top, the bottom being connected to the profile line PL (see FIG. 7). In this example, the projection height PH31 of the ridges 31 is less than the height H90 of the raised portion 90 (that is, PH31 < H90). This allows the serration pattern 30 to be sharply outlined along the boundary with the raised portion 90, which is advantageous in increasing the decorative effect. From the viewpoint of giving a sense of design unity, it is preferable that the height H90 of the raised portion 90 be approximately equal to a projection height PH20 (see FIG. 11) of a raised portion 20 to be described later.

In the second portion 82, the mark 52 is formed by a depression that is lower than the top surface of the raised portion 90 in the tire axial direction. The mark 52 formed by the depression is advantageous in improving a balance of an amount of rubber between the first portion 81 and the second portion 82 and improving uniformity of the sidewall 2. In the present embodiment, the depression forming the mark 52 is lower than the profile line PL in the tire axial direction, and a serration pattern 55 is formed by ridges raised from the bottom surface of the depression and not projecting outward in the tire axial direction relative to the profile line PL (see FIG. 4).

As illustrated in FIGS. 2 and 3, a serration pattern 60 in which ridges 61 are arranged in the tire circumferential direction is provided on the outer side of the band-shaped region 10 in the tire radial direction. The ridges 61 extend along the tire radial direction from the mold split position Ps toward the inner side in the tire radial direction.

In this example, a height of the ridges 61 is less than the height H42 of the circumferential projection 42. An inner end of each ridge 61 in the tire radial direction is connected to the outer peripheral edge Eb (circumferential projection 42) of the band-shaped region 10, or alternatively, may be separated from the outer peripheral edge Eb. The serration pattern 60 can be omitted.

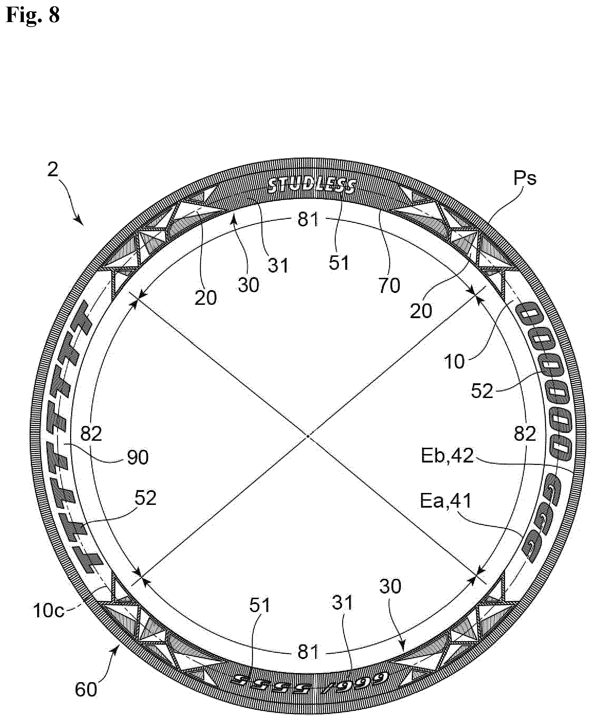

The serration pattern 30 as described above may be provided on the outer surface of at least one of the pair of sidewalls 2. Therefore, in place of the serration pattern 30 illustrated in FIG. 3 or in addition to the serration pattern 30 illustrated in FIG. 3, a serration pattern 30 illustrated in FIG. 8 may be provided (for example, on the outer surface of the other sidewall 2). The configuration illustrated in FIG. 8 is the same as the configuration illustrated in FIG. 3 except that a part of the first portion 81 is formed as described later, and thus the common points will be omitted and the differences will be mainly described. The same components as the components already described are denoted by the same reference numerals to avoid the description from being redundant.

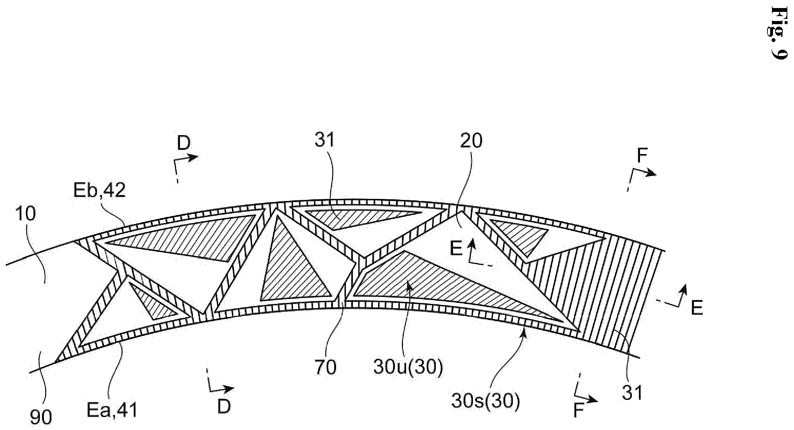

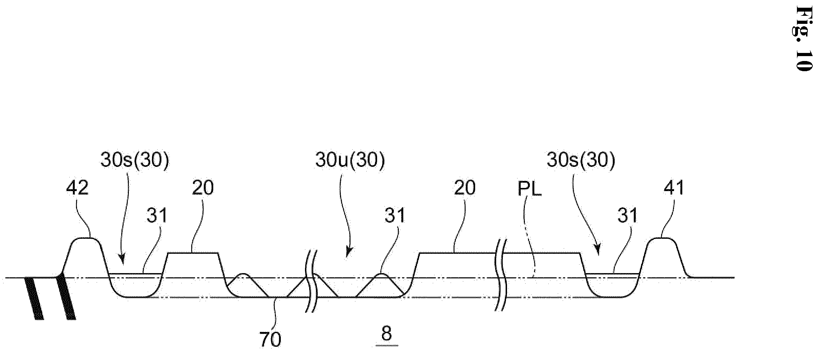

FIG. 9 is a partially enlarged view of FIG. 8. FIGS. 10 and 11 are cross-sectional views taken along lines D-D and E-E in FIG. 9, respectively. As illustrated in FIGS. 8 to 11, in (the first portion 81 of) the band-shaped region 10, the raised portion 20 projecting outward in the tire axial direction and having a top surface approximately parallel to the profile line PL is provided. Such a configuration allows the raised portion 20 to increase the protector effect and makes the resistance to external damage satisfactorily high. The raised portion 20 has a height H20 from bottom to top, the bottom being connected to the bottom surface of the depression 70. The height H20 is greater than the depth D70 (that is, H20 > D70), and the raised portion 20 projects outward in the tire axial direction relative to the profile line PL. The projection height PH20 of the raised portion 20 is obtained relative to the profile line PL.

The serration pattern 30 includes at least one of an outer serration pattern 30s disposed on the outer side of the raised portion 20 or an inner serration pattern 30u disposed on the inner side of the raised portion 20. In the present embodiment, an example where the serration pattern 30 includes both the outer serration pattern 30s and the inner serration pattern 30u has been given. The outer serration pattern 30s is surrounded by an outer contour of the raised portion 20. The inner serration pattern 30u is disposed inside of the outer contour of the raised portion 20. The outer serration pattern 30s is similar in configuration to the serration pattern 30 illustrated in FIG. 3, so that FIG. 6 can be referred to as a cross-sectional view taken along line F-F of FIG. 9. The inner serration pattern 30u is useful for suppressing an increase in the amount of rubber used by the raised portion 20 while enhancing design integrity.

As illustrated in FIGS. 10 and 11, the height H20 of the raised portion 20 is greater than the height H31 of the ridges 31 (that is, H20 > H31), so that such a configuration is advantageous in making the resistance of the sidewall 2 to external damage high enough. Since the projection height PH31 of the ridges 31 is less than the projection height PH20 of the raised portion 20 (that is, PH31 < PH20), the serration pattern 30 is sharply outlined along the boundary with the raised portion 20, which is advantageous in increasing the decorative effect. The raised portion 20 is separated from the pair of circumferential projections 41 and 42, and the outer serration pattern 30s is disposed between the raised portion 20 and the pair of circumferential projections 41 and 42. The projection height PH20 of the raised portion 20 is less than the heights H41 and H42 of the circumferential projections 41 and 42 (that is, PH20 < H41 and H42).

As illustrated in FIGS. 10 and 11, a side surface of the raised portion 20 gradually increases in height from the bottom surface of the depression 70. The side surface of the raised portion 20 is inclined at a predetermined angle θ20 relative to a direction of the normal to the profile line PL. The angle θ20 is, for example, in a range of 10° to 30°. The side surface of the raised portion 20 is smoothly connected to the bottom surface of the depression 70 via a circular arc surface curved inward in the tire axial direction, and such a configuration is advantageous in suppressing the occurrence of cracks.

In the present embodiment, a plurality of (six in the range illustrated in FIG. 9) raised portions 20 are arranged along the tire circumferential direction, and raised portions 20 adjacent to each other are arranged so as to overlap each other in the tire radial direction. The inner serration pattern 30u is provided for each of the raised portions 20. The raised portion 20 and the inner serration pattern 30u each have a polygonal (for example, triangular or quadrangular) outline, but the present invention is not limited to such a configuration. The inner serration pattern 30u is separated from the outline of the raised portion 20, and the raised portion 20 is sharply outlined accordingly, thereby maintaining design integrity.

In the example illustrated in FIG. 9, the ridges 31 of the inner serration pattern 30u extend in a direction different from a direction in which the ridges 31 of the outer serration pattern 30s extend. With such a configuration, an effect of supporting the raised portion 20 by the ridges 31 is produced in a plurality of directions, so that it is possible to make the resistance to external damage satisfactorily high. In the outer serration pattern 30s, the angle of the ridges 31 in the extending direction relative to the tire radial direction is set smaller than the angle of the inner serration pattern 30u, and such a configuration is advantageous in reinforcing the sidewall 2 with the ridges 31 of the outer serration pattern 30s supporting the pair of circumferential projections 41 and 42.
[1] As described above, the pneumatic tire T of the present embodiment includes the pair of sidewalls 2, and, on the outer surface of at least one of the pair of sidewalls 2, the serration pattern 30 in which the ridges 31 are arranged is provided. The serration pattern 30 is disposed in the depression 70 that is lower than the profile line PL of the sidewall 2 in the tire axial direction, and the height H31 of the ridges 31 is greater than the depth D70 of the depression 70. This allows an increase in the decorative effect of the serration pattern 30 while making the resistance of the sidewall 2 to external damage high enough.
[2] In the pneumatic tire according to the above [1], it is preferable that the ridges 31 each have a triangular shape. Such a configuration allows an increase in rigidity of the ridges 31 to increase the resistance to external damage. Moreover, the shadow is easily emphasized as compared with a trapezoidal shape with a flat top, and the decorative effect of the serration pattern 30 can be satisfactorily increased.
[3] In the pneumatic tire according to the above [1] or [2], it is preferable that the projection height PH31 of the ridges 31 relative to the profile line PL be less than the depth D70 of the depression 70. Such a configuration can make the number of ridges 31 large enough to make the resistance to external damage satisfactorily high while avoiding the height H31 of the ridges 31 from becoming excessively large.
[4] In the pneumatic tire according to any one of the above [1] to [3], it is preferable that the serration pattern 30 be provided in at least a part of the band-shaped region 10 extending in the tire circumferential direction on the outer surface of the sidewall 2. Such a configuration allows an increase in the decorative effect of the serration pattern 30 in the band-shaped region 10.
[5] In the pneumatic tire according to the above [4], it is preferable that the band-shaped region 10 be provided between the pair of circumferential projections 41 and 42 projecting outward in the tire axial direction and extending in the tire circumferential direction, and the projection height PH31 of the ridges 31 relative to the profile line PL be less than the heights H41 and H42 of the circumferential projections 41 and 42. Such a configuration allows the serration pattern 30 to be sharply outlined along a boundary with the circumferential projections 41 and 42, which is advantageous in increasing the decorative effect of the serration pattern 30.
[6] In the pneumatic tire according to the above [4] or [5], the band-shaped region 10 may include the first portion 81 where the serration pattern 30 is provided and the second portion 82 where the serration pattern 30 is not provided alternately provided along the tire circumferential direction.
[7] In the pneumatic tire according to any one of the above [4] to [6], the band-shaped region 10 may include the raised portion 20, the raised portion 20 projecting outward in the tire axial direction and having a top surface approximately parallel to the profile line PL. Such a configuration allows the raised portion 20 to increase the protector effect and makes the resistance to external damage satisfactorily high.
[8] In the pneumatic tire according to the above [7], the height H20 of the raised portion 20 may be greater than the depth D70 of the depression 70. Such a configuration allows the raised portion 20 to increase the protector effect and makes the resistance to external damage satisfactorily high.
[9] In the pneumatic tire according to the above [7] or [8], the serration pattern 30 may include at least one of the outer serration pattern 30s disposed on the outer side of the raised portion 20 or the inner serration pattern 30u disposed on the inner side of the raised portion 20. Such a configuration allows the raised portion 20 to increase the protector effect and makes the resistance to external damage satisfactorily high.
[10] In the pneumatic tire according to the above [9], it is preferable that the serration pattern 30 include both the outer serration pattern 30s and the inner serration pattern 30u, and the ridges 31 of the inner serration pattern 30u extend in a direction different from a direction in which the ridges 31 of the outer serration pattern 30s extends. With such a configuration, an effect of supporting the raised portion 20 by the ridges 31 is produced in a plurality of directions, so that it is possible to make the resistance to external damage satisfactorily high.

The pneumatic tire T according to the present invention may be similar in configuration to a normal pneumatic tire except that the sidewall 2 is configured as described above, and may have any known shape, material, and the like.

The embodiment according to the present invention has been described with reference to the drawings. However, this embodiment should not limit specific configurations according to the present invention. The present invention provides a scope indicated by the claims.

The pneumatic tire according to the present invention is limited neither to the above embodiment nor functional effects described above. The tire according to the present invention can be improved and modified in various manners within the scope of the claims. It is further possible to employ any combination of the configurations employed in the above-described embodiment.

## Claims

1. A pneumatic tire (T) comprising a pair of sidewalls (2),
wherein on an outer surface of at least one of the pair of sidewalls (2), a serration pattern (30) in which ridges (31) are arranged is provided,
the serration pattern (30) is disposed in a depression (70) that is lower than a profile line (PL) of the sidewalls (2) in a tire axial direction,
a height of the ridges (31) is greater than a depth of the depression (70),
wherein the serration pattern (30) is provided in at least a part of a band-shaped region (10) extending in a tire circumferential direction on the outer surface of the sidewall (2),
**characterized in that**
the band-shaped region (10) is provided between a pair of circumferential projections (41, 42) projecting outward in the tire axial direction and extending in the tire circumferential direction,
a projection height of the ridges (31) relative to the profile line (PL) is less than a height of the circumferential projections (41, 42),
wherein the band-shaped region (10) includes a raised portion (20), the raised portion (20) projecting outward in the tire axial direction and having a top surface approximately parallel to the profile line (PL);
wherein the raised portion (20) has a height (H20) from the bottom to the top, wherein the bottom is connected to the bottom surface of the depression (70),
wherein the height (H20) of the raised portion (20) is greater than the depth of the depression (70); and
wherein the raised portion (20) is separated from the pair of circumferential projections (41, 42).

2. The pneumatic tire according to claim 1,
wherein the ridges (31) each have a triangular shape viewing along the extending direction.

3. The pneumatic tire according to claim 1 or 2,
wherein a projection height of the ridges (31) relative to the profile line (PL) is less than the depth of the depression (70).

4. The pneumatic tire according to any one of claims 1 to 3,
wherein the band-shaped region (10) includes a first portion (81) where the serration pattern (30) is provided and a second portion (82) where the serration pattern (30) is not provided, the first portion (81) and the second portion (82) are alternately provided along the tire circumferential direction.

5. The pneumatic tire according to any one of the preceding claims,
wherein the serration pattern (30) includes at least one of an outer serration pattern (30s) disposed on an outer side of the raised portion (20) or an inner serration pattern (30u) disposed on an inner side of the raised portion (20).

6. The pneumatic tire according to claim 5,
wherein the serration pattern (30) includes both the outer serration pattern (30s) and the inner serration pattern (30u), and
wherein the ridges (31) of the inner serration pattern (30u) extend in a direction different from a direction in which the ridges (31) of the outer serration pattern (30s) extend.

## Patentansprüche

1. Luftreifen (T), der ein Paar von Seitenwänden (2) aufweist,
wobei auf einer Außenfläche von zumindest einer der beiden Seitenwände (2) ein Verzahnungsmuster (30) angeordnet ist, in dem Rippen (31) angeordnet sind,
das Verzahnungsmuster (30) in einer Vertiefung (70) angeordnet ist, die tiefer ist als eine Profillinie (PL) der Seitenwände (2) in einer Reifenachsenrichtung, eine Höhe der Rippen (31) größer ist als eine Tiefe der Vertiefung (70),
wobei das Verzahnungsmuster (30) in zumindest einem Teil eines bandförmigen Bereichs (10) angeordnet ist, der sich in einer Reifenumfangsrichtung auf der Außenfläche der Seitenwand (2) erstreckt,
**dadurch gekennzeichnet,**
**dass** der bandförmige Bereich (10) zwischen einem Paar von Umfangsvorsprüngen (41, 42) angeordnet ist, die in der Reifenachsenrichtung nach außen vorstehen und sich in der Reifenumfangsrichtung erstrecken,
eine Vorsprungshöhe der Rippen (31) relativ zu der Profillinie (PL) geringer ist als eine Höhe der Umfangsvorsprünge (41, 42),
wobei der bandförmige Bereich (10) einen erhöhten Bereich (20) aufweist,
wobei der erhöhte Bereich (20) in der Reifenachsenrichtung nach außen vorsteht und eine Oberseite aufweist, die annähernd parallel zu der Profillinie (PL) ist;
wobei der erhöhte Bereich (20) eine Höhe (H20) von der Unterseite zur Oberseite aufweist, wobei die Unterseite mit der Unterseite der Vertiefung (70) verbunden ist, wobei die Höhe (H20) des erhöhten Bereichs (20) größer ist als die Tiefe der Vertiefung (70); und
wobei der erhöhte Bereich (20) von dem Paar von Umfangsvorsprüngen (41, 42) getrennt ist.

2. Luftreifen nach Anspruch 1,
wobei die Rippen (31) bei Betrachtung entlang der Erstreckungsrichtung jeweils eine dreieckige Form aufweisen.

3. Luftreifen nach Anspruch 1 oder 2,
wobei eine Erhebungshöhe der Rippen (31) relativ zu der Profillinie (PL) geringer ist als die Tiefe der Vertiefung (70).

4. Luftreifen nach einem der Ansprüche 1 bis 3,
wobei der bandförmige Bereich (10) einen ersten Bereich (81), in dem das Verzahnungsmuster (30) angeordnet ist, und einen zweiten Bereich (82) aufweist, in dem das Verzahnungsmuster (30) nicht angeordnet ist, wobei der erste Bereich (81) und der zweite Bereich (82) abwechselnd entlang der Reifenumfangsrichtung angeordnet sind.

5. Luftreifen nach einem der vorstehenden Ansprüche,
wobei das Verzahnungsmuster (30) zumindest eines der folgenden Muster aufweist: ein Außenverzahnungsmuster (30s), das an einer Außenseite des erhöhten Bereichs (20) angeordnet ist, oder ein Innenverzahnungsmuster (30u), das an einer Innenseite des erhöhten Bereichs (20) angeordnet ist.

6. Luftreifen nach Anspruch 5,
wobei das Verzahnungsmuster (30) sowohl das Außenverzahnungsmuster (30s) als auch das Innenverzahnungsmuster (30u) aufweist, und wobei sich die Rippen (31) des Innenverzahnungsmusters (30u) in einer Richtung erstrecken, die sich von einer Richtung unterscheidet, in der sich die Rippen (31) des Außenverzahnungsmusters (30s) erstrecken.

## Revendications

1. Bandage pneumatique (T) comprenant une paire de parois latérales (2),
dans lequel il est prévu, sur une surface extérieure de l'une au moins de la paire de parois latérales (2), un motif à cannelures (30) dans lequel sont agencées des rainures (31),
le motif à cannelures (30) est disposé dans un renfoncement (70) qui est plus bas qu'une ligne de profile (PL) des parois latérales (2) dans une direction axiale du pneumatique,
une hauteur des nervures (31) est supérieure à une profondeur du renfoncement (70),
dans lequel le motif à cannelures (30) est prévu dans au moins une partie d'une région en forme de bande (10) s'étendant dans une direction circonférentielle du pneumatique sur la surface extérieure de la paroi latérale (2),
**caractérisé en ce que**
la région en forme de bande (10) est prévue entre une paire de projections circonférentielles (41, 42) qui se projettent vers l'extérieur dans la direction axiale du pneumatique et qui s'étendent dans la direction circonférentielle du pneumatique,
une hauteur de projection des nervures (31) relativement à la ligne de profile (PL) est inférieure à une hauteur des projections circonférentielles (41, 42),
dans lequel la région en forme de bande (10) inclut une portion surélevée (20), la portion surélevée (20) se projetant vers l'extérieur dans la direction axiale du pneumatique et ayant une surface de sommet approximativement parallèle à la ligne de profile (PL) ;
dans lequel la portion surélevée (20) a une hauteur (H20) depuis le fond jusqu'au sommet,
dans lequel le fond est connecté à la surface de fond du renfoncement (70), dans lequel la hauteur (H20) de la portion surélevée (20) est supérieure à la profondeur du renfoncement (70) ; et
dans lequel la portion surélevée (20) est séparée de la paire de projections circonférentielles (41, 42).

2. Bandage pneumatique selon la revendication 1,
dans lequel les nervures (31) ont chacune une forme triangulaire dans une vue le long de la direction d'extension.

3. Bandage pneumatique selon la revendication 1 ou 2,
dans lequel une hauteur de projection des nervures (31) relativement à la ligne de profil (PL) est inférieure à la profondeur du renfoncement (70).

4. Bandage pneumatique selon l'une quelconque des revendications 1 à 3,
dans lequel la région en forme de bande (10) inclut une première portion (81) dans laquelle le motif à cannelures (30) est prévu, et une seconde portion (82) dans laquelle le motif à cannelures (30) n'est pas prévu, la première portion (81) et la seconde portion (82) étant prévues en alternance le long de la direction circonférentielle du pneumatique.

5. Bandage pneumatique selon l'une quelconque des revendications précédentes,
dans lequel le motif à cannelures (30) inclut l'un au moins d'un motif à cannelures extérieur (30s) disposé sur un côté extérieur de la portion surélevée (20) et d'un motif à cannelures intérieur (30u) disposé sur un côté intérieur de la portion surélevée (20).

6. Bandage pneumatique selon la revendication 5,
dans lequel le motif à cannelures (30) inclut à la fois le motif à cannelures extérieur (30s) et le motif à cannelures intérieur (30u), et
dans lequel les nervures (31) du motif à cannelures intérieur (30u) s'étendent dans une direction différente d'une direction dans laquelle s'étendent les nervures (31) du motif à cannelures extérieur (30s).
